# EUROPÄISCHE PATENTSCHRIFT

(11) **EP 4 245 643 B1**
(45) Veröffentlichungstag und Bekanntmachung des Hinweises auf die Patenterteilung: **22.10.2025**
(21) Anmeldenummer: 23161159.1
(22) Anmeldetag: 10.03.2023
(51) Int. Cl.: B62D 1/181

(54) **LENKSÄULE FÜR EIN KRAFTFAHRZEUG**
STEERING COLUMN FOR A MOTOR VEHICLE
COLONNE DE DIRECTION POUR UN VÉHICULE AUTOMOBILE

(30) Priorität: 15.03.2022 EP 22162223
(43) Veröffentlichungstag der Anmeldung: 20.09.2023
(73) Patentinhaber: thyssenkrupp Presta Aktiengesellschaft, 9492 Eschen (LI); thyssenkrupp AG, 45143 Essen (DE)
(72) Erfinder: Huber, Sebastian, 6811 Göfis (AT); Bayer, Tim, 9450 Lüchingen (CH)
(74) Vertreter: thyssenkrupp Intellectual Property GmbH

(56) Entgegenhaltungen:
- WO-A1-2021/049803
- DE-A1- 102015 224 602
- DE-A1- 102022 206 615
- DE-T5- 112020 004 263
- GB-A- 2 609 670

## Beschreibung

### Stand der Technik

Die Erfindung betrifft eine Lenksäule für ein Kraftfahrzeug, umfassend eine Manteleinheit, in der eine Lenkspindel um eine in Längsrichtung verlaufende Längsachse drehbar gelagert ist, und die mindestens drei in Längsrichtung teleskopartig verstellbare Mantelelemente aufweist, die mindestens einen Innenmantel, einen Außenmantel und ein dazwischen angeordnetes Zwischenelement umfassen, wobei ein motorischer Verstellantrieb an den Mantelelementen angreift, der einen zwischen Innenmantel und Zwischenelement angeordneten ersten Spindeltrieb, und einen zwischen Zwischenelement und Außenmantel angeordneten zweiten Spindeltrieb aufweist, wobei der erste Spindeltrieb eine in eine erste Spindelmutter eingreifende und relativ dazu von einer Antriebseinheit um die Gewindeachse drehend antreibbare erste Gewindespindel aufweist, und der zweite Spindeltrieb eine in eine zweite Spindelmutter eingreifende und relativ dazu von der Antriebseinheit drehend antreibbare zweite Gewindespindel aufweist, wobei die erste Spindelmutter und die zweite Gewindespindel koaxial drehfest miteinander verbunden sind zur Ausbildung einer Gewindeeinheit, die von der Antriebseinheit drehend antreibbar ist, und die relativ zur Antriebseinheit axial abgestützt ist, wobei der Außenmantel von einer Trageinheit gehalten ist.

Eine Lenksäule für ein Kraftfahrzeug weist eine Manteleinheit auf, in der eine Lenkspindel um ihre Längsachse drehbar gelagert ist, an deren in Fahrtrichtung hinteren, dem Fahrer zugewandten Ende als manuelles Lenkeingabemittel beispielsweise ein Lenkrad angebracht ist. Die Manteleinheit wird von einer an der Fahrzeugkarosserie befestigten Trageinheit gehalten. Durch eine Verstellung der Manteleinheit relativ zur Trageinheit kann die Lenkradposition relativ zur Fahrzeugkarosserie eingestellt werden.

Eine Längsverstellung, bei der das Lenkrad in der Längsrichtung relativ zur Fahrerposition nach hinten oder nach vorn verstellt werden kann, wird bei einer gattungsgemäßen Lenksäule durch eine teleskopartige Ausgestaltung der Manteleinheit und der Lenkspindel ermöglicht. Außerdem kann die Lenksäule im Fall eines Crashs in Längsrichtung zusammengeschoben werden, wodurch wirksam verhindert wird, dass die Lenksäule in das Innere der Fahrgastzelle eindringt und zu Verletzungen der Insassen führt.

Die Manteleinheit einer gattungsgemäßen Lenksäule weist mindestens drei relativ zueinander teleskopierbare Mantelelemente auf, die gleichbedeutend auch als Teleskopelemente oder Mantelrohre bezeichnet werden. Es kann beispielsweise eine Drei- oder Mehrfach-Teleskopanordnung vorgesehen sein, mit mindestens drei oder mehr teleskopierbar ineinander geschachtelten Mantelelementen. Diese umfassen mindestens ein inneres Mantelelement, auch als Innenmantel, Innenmantelelement oder -rohr bezeichnet, welches koaxial in mindestens ein mittleres Mantelelement oder Zwischenelement eintaucht, welches seinerseits in ein äußeres Mantelelement, auch als Außenmantel, Außenmantelelement oder -rohr bezeichnet, teleskopierbar eintaucht. Dadurch, dass die Mantelrohre in Längsrichtung auseinander- oder zusammengefahren werden, kann die Manteleinheit und damit die Lenksäule verkürzt oder verlängert werden.

Zur Verstellung der Lenksäule dient ein motorischer Verstellantrieb, der einen zwischen relativ zueinander verstellbaren Mantelelementen angeordneten Spindeltrieb aufweist, mit einer an dem einen Mantelelement axial abgestützten Gewindespindel, die in eine an einem anderen, relativ dazu verstellbaren Mantelelement axial abgestützte Spindelmutter eingreift. Durch die motorische Antriebseinheit können die Gewindespindel und die Spindelmutter von einem elektrischen Motor relativ zueinander um die Gewinde- oder Spindelachse drehend angetrieben werden, um die Mantelelemente je nach Drehrichtung des Antriebs axial aufeinander zu zusammenzufahren oder voneinander weg auszufahren.

Zur Verstellung einer Mehrfach-Teleskopanordnung ist es aus der US 2019/0210633 A1 bekannt, einen ersten und einen zweiten Spindeltrieb vorzusehen, die jeweils an zwei relativ zueinander zu verstellbaren Mantelelementen angreifen. Dadurch wird eine flexibel vorgebbare, synchronisierte Verstellung ermöglicht. Nachteilig ist jedoch, dass die zwei Spindeltriebe aufwendig konstruiert sind und unabhängig vom Verstellzustand einen relativ großen, durch die Längen der Gewindespindeln fest vorgegebenen Bauraum beanspruchen. Dies kann insbesondere bei Lenksystemen für selbstfahrende Fahrzeuge problematisch sein, bei denen im autonomen Fahrbetrieb die Lenksäule in einer Verstauposition außerhalb des Bedienbereichs möglichst raumsparend zusammenfahrbar sein soll.

Eine Lenksäule der eingangs genannten Art ist beispielsweise aus der DE 10 2015 224602 A1 bekannt. In der WO 2021/049803 A1 wird eine abweichende Bauform des Verstellantriebs beschrieben.

Angesichts der vorangehend erläuterten Problematik ist es eine Aufgabe der vorliegenden Erfindung, die Einsatzmöglichkeiten zu verbessern und einen reduzierten Bauraum zu ermöglichen.

### Darstellung der Erfindung

Diese Aufgabe wird erfindungsgemäß gelöst durch die Lenksäule mit den Merkmalen des Anspruchs 1. Vorteilhafte Weiterbildungen ergeben sich aus den Unteransprüchen.

Bei einer Lenksäule für ein Kraftfahrzeug, umfassend eine Manteleinheit, in der eine Lenkspindel um eine in Längsrichtung verlaufende Längsachse drehbar gelagert ist, und die mindestens drei in Längsrichtung teleskopartig verstellbare Mantelelemente aufweist, die mindestens einen Innenmantel, einen Außenmantel und ein dazwischen angeordnetes Zwischenelement umfassen, wobei ein motorischer Verstellantrieb an den Mantelelementen angreift, der einen zwischen Innenmantel und Zwischenelement angeordneten ersten Spindeltrieb, und einen zwischen Zwischenelement und Außenmantel angeordneten zweiten Spindeltrieb aufweist, wobei der erste Spindeltrieb eine in eine erste Spindelmutter eingreifende und relativ dazu von einer Antriebseinheit um die Gewindeachse drehend antreibbare erste Gewindespindel aufweist, und der zweite Spindeltrieb eine in eine zweite Spindelmutter eingreifende und relativ dazu von der Antriebseinheit drehend antreibbare zweite Gewindespindel aufweist,wobei die erste Spindelmutter und die zweite Gewindespindel koaxial drehfest miteinander verbunden sind zur Ausbildung einer Gewindeeinheit, die von der Antriebseinheit drehend antreibbar ist, und die relativ zur Antriebseinheit axial abgestützt sind, wobei der Außenmantel von einer Trageinheit gehalten ist, ist erfindungsgemäß vorgesehen, dass die Antriebseinheit axial fest an einem Zwischenelement angebracht ist.

Erfindungsgemäß ist vorgesehen, dass die Antriebseinheit axial fest an einem Zwischenelement angebracht ist. Die erfindungsgemäße Gewindeeinheit ist von der Antriebseinheit drehend antreibbar und axial abgestützt gelagert. Die erste Spindelmutter bildet zusammen mit der ersten Gewindespindel einen Tauchspindeltrieb zur Verstellung eines axial zum Zwischenelement benachbarten Mantelelements, beispielsweise des Innenmantels, relativ zum Zwischenelement. Die zweite Gewindespindel bildet zusammen mit der zweiten Spindelmutter einen Rotationsspindeltrieb zur Verstellung eines anderen, axial gegenüberliegendend zum Zwischenelement benachbarten Mantelelements, beispielsweise des Außenmantels, relativ zum Zwischenelement. Beim drehenden Antrieb der Gewindeeinheit kann eine gleichzeitige axiale Verstellung des Außenmantels relativ zum Zwischenelement, und des Zwischenelements relativ zum Innenmantel erfolgen. Vorteilhaft ist dabei die erfindungsgemäße kompakte Bauform.

Die Gewindeeinheit bildet eine kombinierte Gewindespindel-Spindelmuttermutter-Einheit, in der die erste Spindelmutter und die zweite Gewindespindel funktional vereinigt sind. Dabei sind das Innengewinde der ersten Spindelmutter und das Außengewinde der zweiten Gewindespindel koaxial zur gemeinsamen Gewindeachse angeordnet, die entsprechend mit den Spindelachsen beider Spindeltriebe identisch ist. Diese integrierte Gewindeeinheit ist von der Antriebseinheit relativ zur ersten Gewindespindel und zur zweiten Spindelmutter um die Gewindeachse drehend antreibbar, und dabei axial bezüglich der Gewindeachse an der Antriebseinheit abgestützt ist.

Es werden auch solche Ausführungen mit umfasst, bei denen der erste und zweite Spindeltrieb bezüglich Innen- und Außenmantel vertauscht sind, d.h. der erste Spindeltrieb zwischen Außenmantel und Zwischenelement angeordnet ist, oder bei denen ein Spindeltrieb zwischen zwei Zwischenelementen angreift.

Ein Vorteil der Erfindung ist, dass durch drehenden Antrieb des erfindungsgemäßen Gewindeelements die beiden, jeweils durch die ersten und zweiten Gewindespindeln und Spindelmuttern gebildeten Gewindetriebe synchron angetrieben werden. Folglich ist die synchronisierte Verstellung von mindestens drei durch die Spindeltriebe gekoppelten Mantelelementen ohne zusätzliche Synchronisierungseinrichtungen ermöglicht. Außerdem ist die antreibsmäßige Kupplung des integrierten Gewindeelements mit der Antriebseinheit mit geringerem Aufwand möglich, als bei den separaten Spindeltrieben im Stand der Technik. Entsprechend kann der Verstellantrieb in vorteilhafter Weise kompakter und weniger aufwendig ausgestaltet werden. Dadurch, dass nur die eine integrierte Gewindeeinheit drehend antreibbar ist, kann ein konstruktiv einfacher Aufbau und eine hohe Funktions- und Betriebssicherheit realisiert werden.

Die vorteilhaften, variabel anpassbaren Gestaltungsmöglichkeiten kommen insbesondere dadurch zustande, dass der erste Spindeltrieb als sogenannter Tauchspindeltrieb ausgebildet ist, bei dem die erste Spindelmutter drehend angetrieben wird und die darin eingreifende Gewindespindel drehfest an dem relativ zu der Antriebseinheit zu verstellenden Mantelelement festgelegt ist, und der zweite Spindeltrieb als sogenannter Rotationsspindeltrieb ausgebildet ist, bei dem die zweite Gewindespindel drehend angetrieben wird und die darauf aufgeschraubte Spindelmutter drehfest an dem relativ zu der Antriebseinheit zu verstellenden Mantelelement festgelegt ist. Die Antriebseinheit ist an einem bezüglich der beiden genannten verstellbaren Mantelelemente axial feststehenden, dritten Mantelelement festgelegt, und kann das erfindungsgemäße Gewindeelement wahlweise in beide Drehrichtungen antreiben, wodurch beide Spindeltriebe zwangsweise synchron angetrieben werden.

Die Antriebseinheit ist an der Manteleinheit an einem der Mantelelemente angebracht.

Ein elektrischer Motor kann dabei über ein Getriebe, oder auch direkt, mit der erfindungsgemäßen Gewindeeinheit gekuppelt sein, um diese relativ zur Manteleinheit um die Gewindeachse drehend anzutreiben.

Die Manteleinheit weist mindestens drei teleskopierbare Mantelelemente auf, nämlich einen Außenmantel, einen Innenmantel und mindestens einen geschachtelt dazwischen angeordneten Zwischenmantel, der ein Zwischenelement bildet. Dabei ist der Außenmantel von einer mit der Karosserie verbindbaren Trageinheit gehalten.

Durch die teleskopierende Verstellung sind folglich der Innenmantel und auch der Zwischenmantel oder sämtliche Zwischenmäntel relativ zur Trageinheit verstellbar. Dabei ist die motorische Antriebseinheit an dem relativ zur Trageinheit verstellbaren Zwischenmantel bzw. Zwischenelement angebracht.

Dabei ist es wesentlich, dass die erste Gewindespindel eine feststehende Gewindespindel eines Tauspindeltriebs bildet, die sich beispielsweise zwischen dem Zwischenelement (Zwischenmantel), an dem die Antriebseinheit angebracht ist, und dem einen relativ dazu beweglichen Mantel, beispielsweise dem Innenmantel erstreckt, und die zweite Gewindespindel die drehend antreibbare Gewindespindel eines Drehspindeltriebs bildet, die sich zwischen dem Zwischenelement (Zwischenmantel), an dem die Antriebseinheit angebracht ist, und dem anderen relativ dazu beweglichen Mantel, beispielsweise dem Außenmantel erstreckt, und dabei in eine an dem Außenmantel fest angebrachte Spindelmutter eingreift. Durch drehenden Antrieb der erfindungsgemäßen Gewindeeinheit wird das Zwischenelement, an dem die Antriebseinheit angebracht ist, relativ zum Innen- und Außenmantel verstellt, und damit auch relativ zur Trageinheit bewegt. Wesentlich für diese konstruktiv vorteilhafte Kinematik ist insbesondere die Anbringung der Antriebseinheit an dem Zwischenelement, welches relativ zu dem von der Trageinheit gehaltenen Außenmantel verstellbar ist.

Die an dem Zwischenelement angebrachte Antriebseinheit ist außerhalb dieses Zwischenelements angeordnet. Entsprechend sind die erfindungsgemäße Gewindeeinheit und die darin eingreifende erste Gewindespindel ebenfalls außerhalb des Zwischenelements angeordnet, wobei die Gewindeachse mit radialem Abstand parallel zur Längsachse der Manteleinheit verläuft.

Die Gewindeachse der koaxialen Innen- und Außengewinde der Gewindeeinheit verläuft vorzugsweise parallel zur Längsachse der Manteleinheit.

Bevorzugt kann das Innengewinde der ersten Spindelmutter innerhalb des Außengewindes der zweiten Gewindespindel angeordnet sein. Dabei kann das Innengewinde im Bereich der axialen Erstreckung der zweiten Gewindespindel oder axial benachbart dazu angeordnet sein. Beispielsweise kann die Spindelmutter koaxial stirnseitig in einem axialen Endbereich der Gewindespindel angesetzt sein. Dies kommt einer kompakten Bauweise zugute.

Vorzugsweise kann vorgesehen sein, dass die zweite Gewindespindel als Hohlspindel ausgebildet ist, in der die erste Gewindespindel axial aufnehmbar ist. Die Hohlspindel hat einen axialen Durchgang mit einem Öffnungsquerschnitt, der zumindest abschnittweise größer ist als der Außenquerschnitt des Außengewindes der ersten Gewindespindel. Dadurch kann diese beim Zusammenfahren der Manteleinheit durch die erste Spindelmutter hindurchgeschraubt werden und mit ihrem dabei aus der Spindelmutter heraustretenden Abschnitt axial in die zweite Gewindespindel eintauchen. Auf diese Weise kann die erste Gewindespindel praktisch innerhalb der Längserstreckung der hohlen zweiten Gewindespindel verstaut werden, so dass in einem vollständig zusammengefahrenen Verstauzustand beide Spindeltriebe innerhalb einer relativ kurzen Verstaulänge untergebracht werden können, welche im Wesentlichen der Länge der zweiten Gewindespindel entsprechen kann. Dies ist ein Vorteil gegenüber dem genannten Stand der Technik, bei dem auch im zusammengefahrenen Verstauzustand die minimale Verstaulänge mindestens die Summe der Längen beider Gewindespindeln ist.

Eine vorteilhafte Ausführung kann vorsehen, dass die Gewindeeinheit einstückig ausgebildet ist. Zumindest die erste Spindelmutter und die zweite Gewindespindel können dabei als ein einstückiges Bauteil ausgebildet sein, welches das Innengewinde der ersten Spindelmutter und das Außengewinde der zweiten Gewindespindel aufweist. Vorteile sind eine kompakte Bauweise bei einem relativ geringen Fertigungsaufwand und hoher Funktionssicherheit.

Es ist bevorzugt möglich, dass die Gewindeeinheit mit einem Getrieberad der Antriebseinheit verbunden ist. Die Antriebseinheit weist dabei einen elektrischen Motor auf, dessen Motorwelle eingangsseitig an ein Getriebe gekuppelt ist, welches ausgangsseitig mit der Gewindeeinheit verbunden ist, um dies relativ zur Manteleinheit um die Gewindeachse drehend anzutreiben. Dadurch, dass die Gewindeeinheit direkt mit einem ausgangsseitigen Getriebeglied, wie beispielsweise einem Zahnrad, Schneckenrad, Riemenrad oder dergleichen, verbunden ist oder ein solches aufweist, kann in vorteilhafter Weise ein effizienter Antrieb und eine bauraumsparende, mit der Antriebseinheit integrierte Bauweise realisiert werden.

In einer bevorzugten Ausführung kann das Getrieberad einteilig oder einstückig mit der Gewindeeinheit ausgebildet sein Beispielsweise kann die Gewindeinheit, bevorzugt im Bereich der ersten Spindelmutter, auf ihrem Außenumfang einen Zahnkranz aufweisen, der mit einem angetriebenen Getriebemittel des Getriebes in Eingriff stehen kann. Beispielsweise kann auf diese Weise ein integriertes Schneckenrad ausgebildet sein, in das eine motorisch angetrieben Schnecke eingreift. Dadurch wird eine effiziente Fertigung, ein kleiner erforderlicher Bauraum sowie ein geringes Gewicht ermöglicht.

Es kann vorteilhaft sein, dass die Gewindeeinheit einen Kunststoff aufweist. Die erste Spindelmutter und/oder die zweite Gewindespindel können jeweils ganz oder teilweise aus einem Kunststoff ausgebildet sein, bevorzugt zumindest im Bereich der Gewinde. Es ist weiter möglich, ein mit der Gewindeeinheit verbundenes Getrieberad ebenfalls zumindest teilweise aus Kunststoff auszubilden, beispielsweise im Bereich eines Zahnkranzes. Ein Vorteil ist, dass durch einen Kunststoff in einer Materialpaarung mit einem Metall oder einem weiteren Kunststoff günstige Gleiteigenschaften und eine geringe Reibung realisiert werden können, wodurch eine leichtgängige und spielarme Verstellung ermöglicht wird. Darüber hinaus kann ein langfristig verschleißarmer und im Wesentlichen wartungsfreier Betrieb gewährleistet werden.

Bevorzugt kann die Fertigung im Kunststoff-Spritzguss aus einem thermoplastischen Polymer erfolgen. Vorzugsweise können die erste Spindelmutter und/oder die zweite Gewindespindel als einstückiges Spritzgussteil gefertigt werden. Zur Ausbildung als Getrieberad kann beispielsweise ein Zahnkranz ausgebildet werden, der ebenfalls im Spritzguss einstückig integriert sein kann, oder der an das Gewindeelement angespritzt sein kann. Dadurch werden eine gewichtssparende Bauweise und vorteilhafte rationelle Fertigung ermöglicht.

Die Gewindeeinheit kann ein massives Kunststoffteil aufweisen, bevorzugt ein Spritzgussteil, oder ein Kernelement, welches beispielsweise einen metallischen Werkstoff aufweisen kann, und das zumindest abschnittweise von einem Kunststoff umgeben oder damit beschichtet ist, beispielsweise im Bereich der Gewinde und/oder eines Getrieberads. Ein derartiges Kernelement kann vorzugsweise mit dem Kunststoff umspritzt sein.

Um die Reibung zu verringern, kann die Oberfläche der Gewindeeinheit zumindest im Bereich der der Gewinde und/oder eines Getrieberads reibungsmindernd ausgestaltet sein. Hierzu können beispielsweise dauerhaft selbstschmierende Beschichtungen, Hartstoffbeschichtungen oder dergleichen aufgebracht sein, und alternativ oder zusätzlich Schmierstoffreservoirs vorgesehen sein, beispielsweise in die Oberflächen eingeformte Schmierstofftaschen oder dergleichen, die mit Fett oder Festschmierstoff gefüllt sein können.

Bei gleichem Funktionsprinzip kann die zweite Spindelmutter alternativ am Innenmantel festgelegt sein, oder an einem weiteren Zwischenelement, und entsprechend die erste Gewindespindel am Außenmantel, oder an einem weiteren Zwischenelement.

Es ist bevorzugt, dass der erste Spindeltrieb und der zweite Spindeltrieb gegensinnige Gewinde aufweisen. Beispielsweise können die erste Gewindespindel und Spindelmutter ein Rechtsgewinde aufweisen, und die zweite Gewindespindel und Spindelmutter ein Linksgewinde. Bei rechtsdrehendem Antrieb der Gewindeeinheit - bei axialer Blickrichtung von der Gewindeeinheit auf die zweite Spindelmutter im Uhrzeigersinn - wird dann die zweite Spindelmutter auf die Gewindeeinheit zu bewegt, und die erste Gewindespindel wird axial entgegengesetzt dazu ebenfalls auf die Gewindeeinheit zu bewegt. Entsprechend werden Außenmantel und Innenmantel axial gegeneinander, auf die Antriebseinheit zu bewegt, so dass die Mantelelemente in Längsrichtung zusammengefahren werden, wodurch die Manteleinheit verkürzt wird. Dadurch kann ein vorteilhaft einfacher, robuster und funktionssicherer Aufbau realisiert werden.

Dadurch, dass die zweite Gewindespindel bevorzugt als Hohlspindel ausgebildet ist, kann die erste Gewindespindel beim Zusammenfahren axial in diese eintauchen, so dass in dem zusammengefahrenen Zustand der Manteleinheit auch die beiden Spindeltriebe kompakt ineinander verstaut sein können.

Durch eine umgekehrte Antriebsdrehrichtung können die zweite Spindelmutter und die erste Gewindespindel axial entgegengesetzt von der Gewindeeeinheit, und damit von der Antriebseinheit weg bewegt werden, so dass die Mantelelemente in Längsrichtung auseinander ausgefahren werden.

Die Anordnung von Rechts- und Linksgewinde kann bei gleicher Wirkung bezüglich der Spindeltriebe vertauscht sein.

Es ist möglich, dass der erste Spindeltrieb und der zweite Spindeltrieb unterschiedliche Gewindesteigungen aufweisen. Die Gewindesteigung bestimmt den Verstellweg in Abhängigkeit von der relativen Drehung von Gewindespindel und Spindelmutter, und entsprechend die Verstellgeschwindigkeit abhängig von der Drehzahl des Antriebs. Dabei entspricht eine große Gewindesteigung einem relativ großen linearen Verstellweg und einer hohen Verstellgeschwindigkeit, und entsprechend eine kleinere Gewindesteigung einem kleineren Verstellweg und einer geringeren Verstellgeschwindigkeit, jedoch mit einer höheren linearen Verstellkraft. Dadurch, dass die erfindungsgemäße Gewindeeinheit umfassend die erste Spindelmutter und die zweite Gewindespindel von der Antriebseinheit um einen vorgegebenen Drehwinkel mit einer vorgegebenen Drehzahl drehend angetrieben wird, können durch die unterschiedlichen Gewindesteigungen für die beiden Spindeltriebe bei einem vorgegebenen Antrieb unterschiedliche Verstellwege und Verstellgeschwindigkeiten realisiert werden. Dadurch kann in vorteilhafter Weise eine Art asymmetrische Verstellung erfolgen, die individuell angepasst sein kann. Beispielweise können Mantelelemente mit einem größeren Querschnitt von einem ersten Spindeltrieb beim Verstellen durch einen ersten Verstellantrieb relativ zueinander weiter ausgefahren werden, als Mantelelemente mit einem relativ geringeren Querschnitt von einem zweiten Verstellantrieb, um eine möglichst hohe Steifigkeit der ausgefahrenen Teleskopanordnung zu erreichen. Alternativ ist umgekehrt eine relativ schnellere und weitere Verstellung von Mantelelementen mit kleinerem Querschnitt möglich, wodurch die beim Verstellen bewegten Massen reduziert werden können. Dies ermöglicht eine schnellere Verstellung, und/oder eine geringere erforderliche Antriebsleistung der Antriebseinheit.

Es ist möglich, dass an der Lenkspindel eine manuelle Lenkhandhabe anbringbar ist.

Dies kann beispielsweise ein Lenkrad sein, welches drehfest an einem Anschlussabschnitt am hinteren Endabschnitt der Lenkspindel festlegbar ist.

Es kann vorteilhaft sein, dass mindestens einer der Spindeltriebe selbsthemmend ausgestaltet ist. Dies kann dadurch realisiert sein, dass mindestens eines der Gewinde selbsthemmend ausgestaltet ist. Dadurch kann in vorteilhafter Weise sichergestellt werden, dass auch durch hohe, auf den Verstellantrieb wirkende Axialkräfte keine Verstellung der eingestellten Lenksäuleneinstellung erfolgt.

### Beschreibung der Zeichnungen

Vorteilhafte Ausführungsformen der Erfindung werden im Folgenden anhand der Zeichnungen näher erläutert. Im Einzelnen zeigen:
- Figur 1: eine erfindungsgemäße Lenksäule in einem ausgefahrenen Verstellzustand in einer schematischen perspektivischen Ansicht,
- Figur 2: die Lenksäule gemäß Figur 1 in einer weiteren perspektivischen Ansicht,
- Figur 3: die Lenksäule gemäß Figur 1 und 2 in einer axialen Ansicht,
- Figur 4: die Manteleinheit der Lenksäule gemäß Figur 1 in ausgefahrenem Verstellzustand (Betriebsposition) in einer Seitenansicht,
- Figur 5: die Manteleinheit in einer Seitenansicht wie in Figur 4 in zusammengefahrenen Verstellzustand (Verstauposition).

### Ausführungsformen der Erfindung

In den verschiedenen Figuren sind gleiche Teile stets mit den gleichen Bezugszeichen versehen und werden daher in der Regel auch jeweils nur einmal benannt bzw. erwähnt.

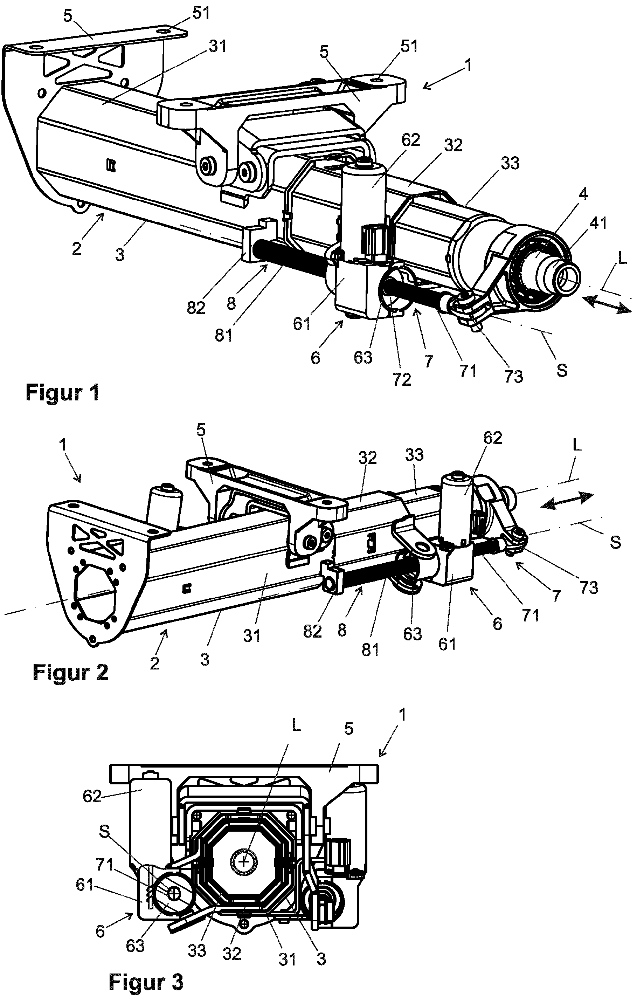

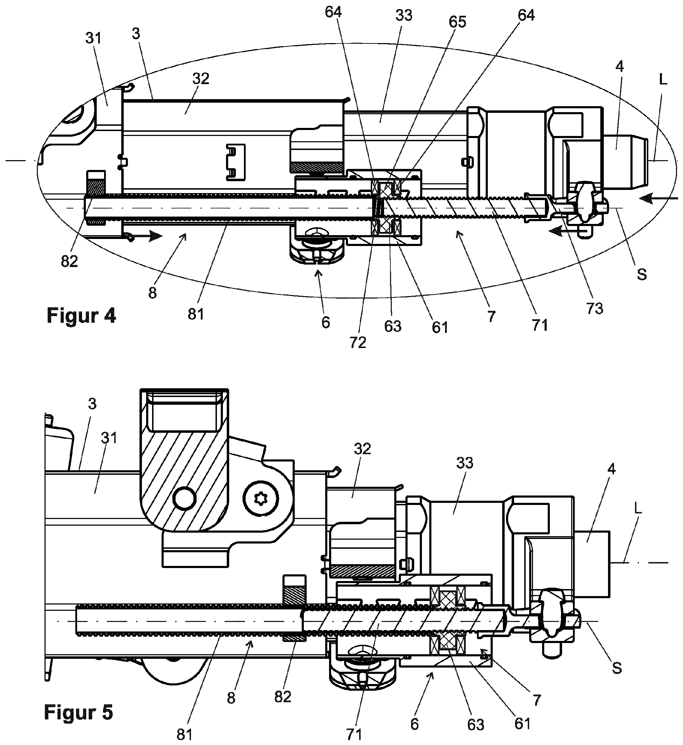

Figuren 1, 2 und 3 zeigen eine erfindungsgemäße Lenksäule 1, und zwar in einer zumindest teilweise ausgefahrenen Betriebsposition (Figuren 1 und 2), und in einer eingefahrenen Verstauposition (Figur 3), Die Blickrichtung ist bezüglich der Fahrtrichtung schräg von hinten oben dargestellt (Figur 1), bzw. schräg von vorn (Figur 2), bzw. in Längsrichtung, d.h. axial (Figur 3). Figur 4 zeigt eine Seitenansicht in einer ausgefahrenen Betriebsposition, und Figur 5 in einer zusammengefahrenen Verstauposition.

Die Lenksäule 1 weist eine Stelleinheit 2 auf. Diese umfasst eine Manteleinheit 3, die einen Außenmantel 31, auch als Außenmantelrohr 31 bezeichnet, einen Zwischenmantel 32, gleichbedeutend auch als Zwischenelement 32 bezeichnet, und einen Innenmantel 33 aufweist, der auch als Innenmantelrohr 33 bezeichnet wird. Diese bilden Mantelelemente 31, 32 und 33, die axial, in Achsrichtung einer Längsachse L, koaxial ineinander teleskopierend verstellbar angeordnet sind, wie mit einem Doppelpfeil angedeutet ist.

In der Manteleinheit 3 ist um die Längsachse L drehbar eine Lenkspindel 4 gelagert, die in ihrem hinteren Endbereich einen Anschlussabschnitt 41 zur Anbringung einer nicht dargestellten manuellen Lenkhandhabe, beispielsweise eines Lenkrads aufweist.

Die Lenkspindel 4 kann zur Längsverstellung ebenfalls teleskopierbar ausgebildet sein. Es ist auch denkbar und möglich, dass die Lenkspindel 4 nicht axial durch die Manteleinheit 3 durchgehend ausgebildet ist, sondern mit elektronischen Drehsensoren eines Steer-by-Wire-Lenksystems zusammenwirkt, bei dem die Lenkspindel keine direkte mechanische Verbindung mit den lenkbaren Rädern hat. Diese Drehsensoren können bevorzugt in der Manteleinheit 3 untergebracht sein, beispielsweise in dem Innenmantel 33, um abhängig von einer manuellen Lenkeingabe elektrische Steuersignale zur Ansteuerung von mit den lenkbaren Rädern zusammenwirkenden elektrischen Lenkaktuatoren zu erzeugen.

Die Manteleinheit 3 ist in einer zweiteiligen Trageinheit 5 gehalten, welche Befestigungsmittel 51 zur Anbringung an einer nicht dargestellten Fahrzeugkarosserie aufweist.

Ein erfindungsgemäßer Verstellantrieb 6 zur teleskopierenden Längsverstellung weist eine Antriebseinheit 61 auf, die an dem Zwischenmantel 32 fixiert und in axialer Richtung abgestützt ist. Die Antriebseinheit weist einen elektrischen Motor 62 auf.

Der Verstellantrieb 6 weist einen ersten Spindeltrieb 7 und einen zweiten Spindeltrieb 8 auf.

Details des Verstellantriebs 6 sind den Figuren 4 und 5 entnehmbar, in denen dieser im Längsschnitt dargestellt ist.

Der erste Spindeltrieb 7 ist als sogenannter Tauchspindeltrieb ausgebildet und umfasst eine erste Gewindespindel 71, die sich entlang einer Gewindeachse S, auch als Spindelachse S bezeichnet, erstreckt, die bevorzugt parallel zur Längsachse L verläuft. Die Gewindespindel 71 greift in das Innengewinde einer ersten Spindelmutter 72 ein, die erfindungsgemäß mit einem Gewindeelement 63 fest verbunden ist, bevorzugt einteilig oder einstückig ausgebildet.

Das Gewindeelement 63 ist um die Gewindeachse S von dem Motor 62 drehend antreibbar in der Antriebseinheit 61 axial (bezüglich der Gewindeachse S) abgestützt gelagert.

Die Gewindespindel 71 ist an ihrem freien Endbereich über ein Verbindungselement 73 bezüglich der Manteleinheit 3 drehfest an dem Innenmantel 33 axial abgestützt und fixiert.

Der zweite Spindeltrieb 8 ist als sogenannter Rotationsspindeltrieb ausgebildet und umfasst eine zweite Gewindespindel 81, die sich ebenfalls entlang der Gewindeachse S erstreckt. Die Gewindespindel 81 ist drehfest koaxial mit dem Gewindeelement 63 verbunden, und kann damit bevorzugt einteilig oder einstückig ausgebildet sein. Entsprechend sind die erste Spindelmutter 72 und die zweite Gewindespindel 81 erfindungsgemäß zur Ausbildung der Gewindeeinheit 63 koaxial bezüglich der Gewindeachse S drehfest und axial fest miteinander verbunden. Die Gewindeeinheit 63 ist von der Antriebseinheit 61 um die Gewindeachse S drehend antreibbar, und dabei relativ zur Antriebseinheit 61 axial abgestützt.

An ihrem axial von dem Gewindeelement 63 abstehenden Bereich weist die zweite Gewindespindel 81 ein Außengewinde auf, welches in eine zweite Spindelmutter 82 eingreift. Diese ist an dem Außenmantel 31 axial abgestützt und drehfest fixiert.

In Figur 4 ist deutlich erkennbar, wie das Innengewinde der ersten Spindelmutter 72 koaxial innerhalb des Gewindeelements 63 ausgebildet ist. Die erste Spindelmutter 72 ist axial stirnseitig an der zweiten Gewindespindel 81 fest angebracht, bevorzugt in einer einstückigen Ausbildung, beispielsweise aus einem Kunststoff.

Das Gewindeelement 63 ist zwischen Drucklagern 64 in der Antriebseinheit 61 drehbar axial abgestützt. Diese Drucklager 64 können als Wälzlager ausgebildet sein, beispielsweise als Schrägkugellager in X-Anordnung oder O-Anordnung.

Auf ihrem Außenumfang, bevorzugt im Bereich der zwischen den Drucklagern 64 gelagerten ersten Spindelmutter 72, weist das Gewindeelement 63 einen Zahnkranz 65 auf. Dadurch ist es als Getrieberad ausgebildet, in das ein nicht im Einzelnen dargestelltes, von dem Motor 62 antreibbares Getrieberad, beispielsweise eine Schnecke, getriebemäßig eingreift. Der Zahnkranz 65 kann bevorzugt ebenfalls einstückig mit dem Gewindeelement ausgebildet sein, beispielsweise durch eine Kunststoff-Umspritzung.

Die Funktion wird anhand der Figuren 4 und 5 erläutert, wobei Figur 4 eine Betriebsposition zeigt, in der die Mantelelemente 31, 32, 33 in Längsrichtung ausgefahren sind, und Figur 5 eine Verstauposition, in der die Mantelelemente 31, 32, 33 maximal zusammengefahren sind.

Die beiden Spindeltriebe 7 und 8 weisen gegensinnige Gewinde auf, beispielsweise kann der erste Spindeltreib 7 ein Linksgewinde aufweisen, und der zweite Spindeltreib 8 ein Rechtsgewinde, oder umgekehrt.

Die zweite Gewindespindel 81 ist als rohrförmige Hohlspindel ausgebildet, die koaxial an die erste Spindelmutter 72 angesetzt ist. Dabei ist der offene Innendurchmesser der zweiten Gewindespindel 81 größer als der Außendurchmesser des Außengewindes der ersten Gewindespindel 71. Dadurch kann die erste Gewindespindel 71 koaxial in die zweite Gewindespindel 81 eingebracht werden.

Wird in dem ausgefahrenen Verstellzustand die Gewindeeinheit 63 von dem Motor 62 drehend angetrieben, beispielsweise axial, in Figuren 4 und 5 von rechts gesehen im Uhrzeigersinn, wird die zweite Gewindespindel 81 in die zweite Spindelmutter 82 eingeschraubt. Dadurch wird der Außenmantel 31 auf die Antriebseinheit 61 und das Zwischenelement 32 zu bewegt, wie mit dem in Figur 4 nach rechts gerichteten Pfeil angedeutet ist. Gleichzeitig wird die erste Gewindespindel 71 in die rotierende erste Spindelmutter 72 eingeschraubt, und bewegt sich zusammen mit dem Innenmantel 33 auf die Antriebseinheit 61 und das damit verbundene Zwischenelement 61 zu, wie mit dem nach links gerichteten Pfeil angedeutet ist.

Entsprechend bewirkt der drehende Antrieb des erfindungsgemäßen Gewindeelements 63 ausgehend von dem ausgefahrenen Verstellzustand gemäß Figur 4 eine gleichzeitige Betätigung der beiden axial gegensinnig wirkenden Spindeltriebe 7 und 8, so dass die Mantelelemente 31, 32, 33 synchronisiert zusammengefahren werden.

Die maximal zusammengefahrene Verstauposition ist in Figur 5 gezeigt. Darin ist erkennbar, wie die erste Gewindespindel 71 nahezu vollständig axial in die als Holspindel ausgebildete zweite Gewindespindel 81 eintaucht. Dadurch wird eine vorteihafte, besonders kompakte Vestauung ermöglicht.

Es ist möglich, dass die Gewinde der Spindeltriebe 7 und 8 die gleiche Gewindesteigung haben, oder auch unterschiedliche Gewindesteigungen aufweisen können, um für einen gegebenen drehenden Antrieb des Gewindeelements 63 unterschiedliche Verstellwege zwischen den Mantelelementen 31 und 32 bzw. 32 und 33 zu realisieren.

Das Gewindeelement 63 kann einschließlich der ersten Spindelmutter 72, der zweiten Gewindespindel 81 und/oder dem Zahnkranz 65 einen Kunststoff aufweisen, oder vollständig daraus ausgebildet sein, beispielsweise als Kunststoff-Spritzgussteil aus einem thermoplastischen Polymer. Die erste Gewindespindel 71 und die zweite Spindelmutter 82 können aus einem metallischen Werkstoff ausgebildet sein, beispielsweise aus Stahl. Dadurch kann eine vorteilhaft reibungsarme Reibpaarung realisiert werden.

Es ist erfindungswesentlich, dass die Antriebseinheit 61 an dem Zwischenmantel 32 angebracht ist, der relativ zum Außenmantel 31 und damit auch relativ zur Trageinheit 5 verstellbar ist. Somit wird die Antriebseinheit 61 beim Verstellen relativ zur Trageinheit 5 bewegt.

### Bezugszeichenliste

- 1: Lenksäule
- 2: Stelleinheit
- 3: Manteleinheit
- 31: Außenmantel (Mantelelement)
- 32: Zwischenelement (Mantelelement)
- 33: Innenmantel (Mantelelement)
- 4: Lenkspindel
- 5: Trageinheit
- 51: Befestigungsmittel
- 6: Verstellantrieb
- 61: Antriebseinheit
- 62: Motor
- 63: Gewindeeelement
- 64: Drucklager
- 65: Zahnkranz
- 7: erster Spindeltrieb
- 71: erste Gewindespindel
- 72: erste Spindelmutter
- 73: Verbindungselement
- 8: zweiter Spindeltrieb
- 81: zweite Gewindespindel
- 82: zweite Spindelmutter

- L: Längsachse
- S: Gewindeachse (Spindelachse)

## Patentansprüche

1. Lenksäule (1) für ein Kraftfahrzeug, umfassend eine Manteleinheit (3), in der eine Lenkspindel (4) um eine in Längsrichtung verlaufende Längsachse (L) drehbar gelagert ist, und die mindestens drei in Längsrichtung teleskopartig verstellbare Mantelelemente (31, 32, 33) aufweist, die mindestens einen Innenmantel (33), einen Außenmantel (31) und ein dazwischen angeordnetes Zwischenelement (32) umfassen, wobei ein motorischer Verstellantrieb (6) an den Mantelelementen (31, 32, 33) angreift, der einen zwischen Innenmantel (33) und Zwischenelement (32) angeordneten ersten Spindeltrieb (7), und einen zwischen Zwischenelement (32) und Außenmantel (31) angeordneten zweiten Spindeltrieb (8) aufweist, wobei der erste Spindeltrieb (7) eine in eine erste Spindelmutter (72) eingreifende und relativ dazu von einer Antriebseinheit (61) drehend antreibbare erste Gewindespindel (71) aufweist, und der zweite Spindeltrieb (8) eine in eine zweite Spindelmutter (82) eingreifende und relativ dazu von der Antriebseinheit (61) drehend antreibbare zweite Gewindespindel (81) aufweist,
wobei die erste Spindelmutter (72) und die zweite Gewindespindel (81) koaxial drehfest miteinander verbunden sind zur Ausbildung einer Gewindeeinheit (63), die von der Antriebseinheit (61) drehend antreibbar ist, und die relativ zur Antriebseinheit (61) axial abgestützt ist,
wobei der Außenmantel (31) von einer Trageinheit (5) gehalten ist,
**dadurch gekennzeichnet,**
**dass** die Antriebseinheit (61) axial fest an einem Zwischenelement (32) angebracht ist.

2. Lenksäule nach Anspruch 1, **dadurch gekennzeichnet, dass** das Innengewinde der ersten Spindelmutter (72) innerhalb des Außengewindes der zweiten Gewindespindel (81) angeordnet ist.

3. Lenksäule nach einem der vorangehenden Ansprüche, **dadurch gekennzeichnet, dass** die zweite Gewindespindel (81) als Hohlspindel ausgebildet ist, in der die erste Gewindespindel (71) axial aufnehmbar ist.

4. Lenksäule nach einem der vorangehenden Ansprüche, **dadurch gekennzeichnet, dass** die Gewindeeinheit (63) einstückig ausgebildet ist.

5. Lenksäule nach einem der vorangehenden Ansprüche, **dadurch gekennzeichnet, dass** die Gewindeeinheit (63) mit einem Getrieberad (65) der Antriebseinheit (61) verbunden ist.

6. Lenksäule nach einem der vorangehenden Ansprüche, **dadurch gekennzeichnet, dass** die Gewindeeinheit (63) einen Kunststoff aufweist.

7. Lenksäule nach einem der vorangehenden Ansprüche, **dadurch gekennzeichnet, dass** der erste Spindeltrieb (7) und der zweite Spindeltrieb (8) gegensinnige Gewinde aufweisen.

8. Lenksäule nach einem der vorangehenden Ansprüche, **dadurch gekennzeichnet, dass** der erste Spindeltrieb (7) und der zweite Spindeltrieb (8) unterschiedliche Gewindesteigungen aufweisen.

9. Lenksäule nach einem der vorangehenden Ansprüche, **dadurch gekennzeichnet, dass** an der Lenkspindel (4) eine manuelle Lenkhandhabe anbringbar ist.

10. Lenksäule nach einem der vorangehenden Ansprüche, **dadurch gekennzeichnet, dass** mindestens einer der Spindeltriebe (7, 8) selbsthemmend ausgestaltet ist.

## Claims

1. Steering column (1) for a motor vehicle, comprising a jacket unit (3), in which a steering spindle (4) is mounted rotatably about a longitudinal axis (L) extending in the longitudinal direction, and which has at least three casing elements (31, 32, 33), which comprise at least an inner casing (33), an outer casing (31) and an intermediate element (32) arranged therebetween, wherein a motorized adjustment drive (6) acts on the casing elements (31, 32, 33), which has a first spindle drive (7) arranged between the inner casing (33) and the intermediate element (32), and a second spindle drive (8) arranged between the intermediate element (32) and the outer casing (31), the first spindle drive (7) having a first threaded spindle (71) which engages in a first spindle nut (72) and can be driven in rotation relative thereto by a drive unit (61), and the second spindle drive (8) having a second threaded spindle (81) which engages in a second spindle nut (82) and can be driven in rotation relative thereto by the drive unit (61),
wherein the first spindle nut (72) and the second threaded spindle (81) are coaxially non-rotatably connected to one another to form a threaded unit (63) which can be driven in rotation by the drive unit (61) and which is axially supported relative to the drive unit (61),
wherein the outer casing (31) is held by a support unit (5),
**characterized in**
**that** the drive unit (61) is axially fixedly attached to an intermediate element (32).

2. Steering column according to claim 1, **characterized in that** the internal thread of the first spindle nut (72) is arranged inside the external thread of the second threaded spindle (81).

3. Steering column according to one of the preceding claims, **characterized in that** the second threaded spindle (81) is designed as a hollow spindle in which the first threaded spindle (71) can be axially accommodated.

4. Steering column according to one of the preceding claims, **characterized in that** the threaded unit (63) is formed in one piece.

5. Steering column according to one of the preceding claims, **characterized in that** the threaded unit (63) is connected to a gear wheel (65) of the drive unit (61).

6. Steering column according to one of the preceding claims, **characterized in that** the threaded unit (63) comprises a plastic material.

7. Steering column according to one of the preceding claims, **characterized in that** the first spindle drive (7) and the second spindle drive (8) have threads in opposite directions.

8. Steering column according to one of the preceding claims, **characterized in that** the first spindle drive (7) and the second spindle drive (8) have different thread pitches.

9. Steering column according to one of the preceding claims, **characterized in that** a manual steering handle can be attached to the steering spindle (4).

10. Steering column according to one of the preceding claims, **characterized in that** at least one of the spindle drives (7, 8) is designed to be self-locking.

## Revendications

1. Colonne de direction (1) pour un véhicule automobile, comprenant une unité d'enveloppe (3) dans laquelle un arbre de direction (4) est monté à rotation autour d'un axe longitudinal (L) s'étendant dans la direction longitudinale, et qui comprend au moins trois éléments d'enveloppe (31, 32, 33) qui comprennent au moins une enveloppe intérieure (33), une enveloppe extérieure (31) et un élément intermédiaire (32) disposé entre elles, un entraînement de réglage motorisé (6) agissant sur les éléments d'enveloppe (31, 32, 33), qui présente un premier entraînement à broche (7) disposé entre l'enveloppe intérieure (33) et l'élément intermédiaire (32), et un deuxième entraînement à broche (8) disposé entre l'élément intermédiaire (32) et l'enveloppe extérieure (31), le premier entraînement de broche (7) présentant une première broche filetée (71) s'engageant dans un premier écrou de broche (72) et pouvant être entraînée en rotation par rapport à celui-ci par une unité d'entraînement (61), et le deuxième entraînement de broche (8) présentant une deuxième broche filetée (81) s'engageant dans un deuxième écrou de broche (82) et pouvant être entraînée en rotation par rapport à celui-ci par l'unité d'entraînement (61),
le premier écrou de broche (72) et la deuxième broche filetée (81) étant reliés entre eux de manière coaxiale et solidaire en rotation pour former une unité filetée (63) qui peut être entraînée en rotation par l'unité d'entraînement (61) et qui est soutenue axialement par rapport à l'unité d'entraînement (61),
l'enveloppe extérieure (31) étant maintenue par une unité de support (5),
**caractérisé en ce que**
**en ce que** l'unité d'entraînement (61) est montée axialement de manière fixe sur un élément intermédiaire (32).

2. Colonne de direction selon la revendication 1, **caractérisée en ce que** le filetage intérieur du premier écrou de broche (72) est disposé à l'intérieur du filetage extérieur de la deuxième broche filetée (81).

3. Colonne de direction selon l'une des revendications précédentes, **caractérisée en ce que** la deuxième tige filetée (81) est réalisée sous la forme d'une tige creuse dans laquelle la première tige filetée (71) peut être logée axialement.

4. Colonne de direction selon l'une des revendications précédentes, **caractérisée en ce que** l'unité filetée (63) est réalisée d'une seule pièce.

5. Colonne de direction selon l'une des revendications précédentes, **caractérisée en ce que** l'unité filetée (63) est reliée à une roue d'engrenage (65) de l'unité d'entraînement (61).

6. Colonne de direction selon l'une des revendications précédentes, **caractérisée en ce que** l'unité filetée (63) comprend une matière plastique.

7. Colonne de direction selon l'une des revendications précédentes, **caractérisée en ce que** le premier mécanisme à vis (7) et le deuxième mécanisme à vis (8) présentent des filetages de sens opposés.

8. Colonne de direction selon l'une des revendications précédentes, **caractérisée en ce que** le premier entraînement à vis (7) et le deuxième entraînement à vis (8) présentent des pas de vis différents.

9. Colonne de direction selon l'une des revendications précédentes, **caractérisée en ce qu'**une manette de direction manuelle peut être montée sur l'arbre de direction (4).

10. Colonne de direction selon l'une des revendications précédentes, **caractérisée en ce qu'**au moins l'un des entraînements de broche (7, 8) est conçu de manière autobloquante.
